# EUROPEAN PATENT SPECIFICATION

(11) **EP 1 328 795 B1**
(45) Date of publication and mention of the grant of the patent: **09.09.2009**
(21) Application number: 01978637.5
(22) Date of filing: 26.10.2001
(51) Int. Cl.: G01N 21/35

(54) **PROCESSING OF INORGANIC PARTICULATE MATERIALS**
BEHANDLUNG VON ANORGANISCHEN TEILCHENFÖRMIGEN MATERIALIEN
TRAITEMENT DE MATERIAUX PARTICULAIRES INORGANIQUES

(30) Priority: 26.10.2000 GB 0026173
(43) Date of publication of application: 23.07.2003
(60) Divisional application: 08019601.7
(73) Proprietor: Imerys Minerals Limited, St. Austell Cornwall PL25 4DJ (GB)
(72) Inventor: GOODMAN, Howard, Tregony, Cornwall TR2 5RN (GB); HOOPER, Jeremy, John, Bodmin, Cornwall PL30 5ED (GB)
(74) Representative: Brown, David Leslie
(86) International application number: PCT/GB2001/004786
(87) International publication number: WO 2002/035213

(56) References cited:
- EP-A- 0 803 726
- WO-A-01/92856
- WO-A-92/09881
- WO-A-98/29787
- GB-A- 2 217 838
- GB-A- 2 259 766

## Description

### Field of the Intention

The present invention relates to the processing of inorganic particulate materials. In particular, it relates to the processing of such materials wherein one or more physical or chemical properties are to be analysed (in particular, measured to determine the quality of the material processed). The term "inorganic particulate materials" used herein refers to finely divided minerals, and particulate products chemically synthesised from minerals, which have undergone, are undergoing, or are destined to undergo, industrial processing to modify one or more of their characteristics. The inorganic particulate material may, for example, be dry or entrained in a liquid carrier (e.g. as a slurry). The term "physical or chemical properties" used herein includes the physical or chemical nature of the inorganic particulate materials as well as the performance of the inorganic particulate materials under any particular condition or physical or chemical test. For example, the amount of one or more associated substances in contact with or contained within with the particles of such materials may be required to be measured for quality assessment or control purposes.

### Background of the Invention

Various inorganic particulate materials often have impurity or additive substances associated with their particles, particularly on their particle surfaces or embodied within the particles, which affect the properties of such materials. As a first example, hydrous or calcined kaolins may be treated with a surface treatment agent such as an amine or a silane to form a reaction product on the particle surfaces which may provide beneficial dispersibility in compositions containing hydrophobic polymeric host materials. As a second example, calcium carbonate chemically synthesised by the reaction of lime (calcium hydroxide) and carbon dioxide may have a minor amount of unreacted lime present as an impurity in contact with its particles. As a third example, calcium carbonate products may have an undesirable amount of moisture present on their particles and may have a hydrophobe or desiccant such as a fatty acid (e.g. stearic acid) added thereto to reduce the surface moisture content and to improve the dispersability of the calcium carbonate particles into a molten polymer such as polyethylene, polypropylene or polyvinyl chloride. As a fourth example, it may be necessary to determine the level of impurity, e.g. acid insoluble residue, present in calcium carbonate obtained from natural sources such as chalk or marble and to be further processed. In these and other cases, it is desirable for the amount of the substance(s) of interest associated with the particles of the inorganic particulate material to be accurately measured and controlled so that it can be ensured that an optimal or minimal amount of the associated substance(s) is present.

An aim of the present invention is therefore to provide a method of assessing the quality of inorganic particulate materials, in or as a consequence of the processing thereof, wherein a physical or chemical property thereof, e.g. the amount of a substance of interest associated with the particles thereof, is to be accurately measured in an improved or at least alternative manner not previously contemplated in the processing of such inorganic particulate materials.

GB-A-2259766 (published 24 March 1993) describes the use of diffuse reflectance infrared spectroscopy to analyse the phase composition of a cement. Only mid-infra-red (4,000-400 cm⁻¹) and far-infra-red (below 400cm⁻¹) spectra are used, the latter being restricted to some special applications. There is no teaching or suggestion of the use of near infra-red (NIR) spectroscopy (12,000-4,000cm⁻¹). GB-A-22 17 838 discloses near infrared spectroscopy used for determining properties of organic and inorganic materials.

### Brief Description of the Invention

The invention is defined in claim 1.

The step of obtaining a near infra-red spectrum of the inorganic particulate material under analysis may suitably comprise irradiating a sample of the inorganic particulate material with a beam of near infra-red radiation, detecting near infra-red radiation which has been transmitted, reflected or scattered by the sample, and producing a signal which is representative of the spectrum of the detected near infra-red radiation as the produced signal across a range of radiation frequencies. The term "sample" used herein includes a sample *in situ* in an industrial processing apparatus as well as withdrawn samples outside the apparatus. The determination of the physical or chemical property of the inorganic particulate material may suitably comprise analysing the said signal to determine the property of interest.

The term "near infra-red" used herein refers to light within the conventionally understood "near infrared" range of frequencies having wave numbers from 12,000 to 4,000 cm⁻¹, more particularly about 10,000 to 4,000 cm⁻¹ (wavelengths about 1000 to 2500 nm).

The inorganic particulate material has associated therewith in contact with the particles of the material one or more substances of interest which affect properties of the material. The method of the invention may, for example, involve a quantitative measurement of the amount or amounts of the one or more associated substances of interest. The associated substance may be a lattice or surface impurity, e.g. an organic or inorganic impurity or contaminant or moisture where the material is desirably dry or an additive which has been deliberately added to the material to improve the properties thereof, e.g. a dispersing agent or a surface treatment agent.

The method of the invention may, for example, involve a quantitative measurement of a physical or chemical property of the inorganic particulate material itself, such as the degree of crystallinity of a crystalline mineral or the platelet size or shape of a clay. Although infra-red spectroscopy has been used in some specialised industries for the monitoring of chemical reactions (see for example WO 98 29787), the use of near infra-red analysis in the assessment of inorganic particulate materials has not previously been contemplated. Such a method provides a way of assessing such materials which is more versatile, accurate and efficient than assessment methods previously employed in the field. It has been found - surprisingly - that the method of the present invention enables non-destructive, quantitative determination of physical and chemical properties of inorganic particulate materials, at industrially acceptable levels of accuracy. The method of the present invention is applicable both to continuous and batchwise industrial processes. As described below, the method according to the invention may be employed as an analytical procedure during continuous methods for the processing of inorganic particulate materials, e.g. as an on-line, in-line or off-line procedure. The method of the invention may beneficially be used to generate control signals which may in turn be employed in closed loop control methods for adjusting process conditions in the processing of inorganic particulate materials.

### Detailed Description of the Invention

### Nature of the Sample

The inorganic particulate material which is assessed by the method of the invention may beneficially comprise - and may consist essentially of - one or more of the mineral materials which are conventionally employed as minerals, pigments, fillers or extenders or substances chemically convertible into the same. Such minerals etc. may be white or coloured and may be employed in compositions for the manufacture of products such as papers sheets, paper coatings, ceramics, porcelain and earthenware, plastics, sealants, rubbers, paints, constructional materials and the like. The inorganic particulate material may for example comprise one or more of hydrous kaolin, calcined kaolin, chemically aggregated kaolin, feldspar, silica, magnesia, aluminium silicate, calcium carbonate, magnesium carbonate, calcium magnesium carbonate, barium carbonate, calcium oxide, calcium hydroxide, aluminium hydroxide, titanium dioxide, talc, calcium sulphate, satin white, particulate materials obtained from three layer minerals such as bentonite or saponite and materials obtained from wollastonite or pyrophyllite. The inorganic particulate material may also comprise mica or halloysite present as primary material or as trace impurity to be detected.

Where the inorganic particulate material comprises calcium carbonate, the calcium carbonate may be obtained by processing of material obtained from naturally occurring minerals, e.g. limestone, chalk or marble or it may be obtained by chemical synthesis, e.g. by the reaction of carbon dioxide and calcium hydroxide.

The sample of inorganic particulate material to be irradiated in the method of the invention may be in the form of a dry powder or a suspension in a wet or dry suspending medium, e.g. water or an organic liquid or solid such as a polymer material. The inorganic particulate material may be an on-line, in-line or off-line sample of a material being treated in a continuous process.

Where the radiation to be detected is that transmitted by the sample, the sample may be in a convenient form which transmits the radiation, e.g. a thin film, e.g. contained in a container or between substrates or suspended in a carrier medium, e.g. a film of material made of a polymeric composition.

The inorganic particulate material which is assessed by the method of the invention may have a mean particle size which is less than 10µm, in many cases less than 5µm. For example, for employment in many commercial applications, the inorganic particulate material may have a particle size distribution such that at least 50% by weight of its particles are smaller than 2µm. In this specification, mean particle size and all other particle size properties are as determined for a fully dispersed dilute aqueous suspension of the particulate material in question by sedimentation using a SEDIGRAPH^{™} 5100 machine (supplied by the Micromeritics Corporation, Norcross, Georgia, USA (tel: (770) 662 3620; www.micromeritics, com)) in a well-known manner.

Where the property measured concerns the amount of an associated substance or substances, the amount present of the said associated substance or substances which is measured in the method of the invention is not critical(i.e. can vary widely) and the amount present will in general depend upon the type of substance of interest. The associated substance may typically be a an impurity, contaminant or constituent, e.g. being present in a minor amount, for example up to about 50% by weight e.g. 15% or less by weight, in many cases 5% or less by weight, in some cases 1% or less by weight, based on the weight of inorganic particulate material present. Where the object of the property measurement is to assess the amount of a reactive agent which has reacted with the material at the surface of the particles thereof, e.g. the amount of amine or silane which has reacted with hydrous or calcined kaolin, the amount of the associated material to be measured or assessed may be less than three monolayers, in some cases less than two monlayers, where a monolayer is the minimum amount of the reactive agent needed to coat the particle surfaces, i.e. with a one molecule layer of the agent.

Examples of substances, associated with the inorganic particulate materials being assessed, whose amounts present may be measured in the method of the invention, are as follows:
(i) reaction products which are present on the surfaces of the particles of the inorganic particulate materials, e.g. the reaction product of kaolin and an amine or a silane (organosilane) which has been applied to treat the surfaces of the kaolin particles to facilitate dispersibility in application compositions;
(ii) unreacted treatment agent which has been applied to react with the particle surfaces, e.g. unreacted amine applied to treat hydrous or calcined kaolin or other kandite clay mineral;
(iii) moisture which is present on the particle surfaces;
(iv) contaminants which are present on the particle surfaces or within particle aggregates; e.g. unreacted calcium hydroxide present on the surfaces of precipitated calcium carbonate prepared by the reaction of carbon dioxide and calcium hydroxide;
(v) lattice impurities, e.g iron and/or titania, present in clays such as kaolins or ball clays or in limestone or calcium oxide and hydroxide to be produced therefrom;
(vi) performance modifying agents such as fatty acids e.g. stearic acid) which are present on the surfaces of hydrous or calcined kaolin or other kandite clay particles, or calcium carbonate particles, particularly to control moisture and/or to improve dispersibility into a molten polymer such as polyethylene, polypropylene or polyvinyl chloride;
(vii) crystalline forms of the particulate material present in association with the particles, such as calcite and/or aragonite present in association with precipitated calcium carbonate;
(viii) organic components such as quaternary amines which are present (e.g. in amounts up to about 50% by weight) in organoclays such as organobentonites.

Examples of physical or chemical properties of the inorganic particulate materials being assessed, which properties may be measured in the method of the invention, are as follows:
(i) the crystallinity or other mineralogical properties of minerals such as kaolinite, mica or feldspar;
(ii) the platelet shapes of hydrous clays;
(iii) the platelet surface area of hydrous clays;
(iv) the effect of mineral fillers on the breathability of filled polymeric films;
(v) the effect of minerals (e.g. clays) on the porosity and/or stain resistance of paint films;
(vi) the effect of minerals (e.g. clays) on the opacity and/or optical scattering of paint films;
(vii) the oil absorbency of minerals (e.g. hydrous clays).

### Calibration

A suitable calibration procedure may be required, to establish the data relating near infra-red spectra to the physical or chemical property of interest. The calibration procedure should be performed on a functional equivalent or analogue of the material intended to be analysed. It is preferred that the calibration method should use a substrate as similar as possible to the material intended to be analysed in practice. The property to be measured by near infrared spectroscopy may, for one or more given samples, be measured in a known manner by another method, whereby the apparatus employed to carry out the analysis of the detected near infra-red spectrum is suitably calibrated. For example, where moisture content of a mineral sample is to be measured, a calibration curve for different moisture contents may be obtained by applying use of Karl Fischer titrations or microbalance weight measurements to give base moisture value measurements as references for the infra-red derived measurements. As another example, where it is necessary to determine the amount present of a reaction product, e.g. amine reacted with a kaolin on the surfaces of its particles, the calibration measurements of the reaction product may be measured by thermal gravimetric analysis. Further examples of calibration techniques are shown in the working examples below and the accompanying drawings. The data obtained from the calibration may be stored in an electronic processing medium, e.g. a computer or dedicated microprocessor, and data obtained from the near infra-red analysis may be compared with the calibration data in that medium.

### Apparatus

The sample of inorganic particulate material to be assessed by near infra-red analysis may be irradiated and the radiation from the sample may be detected, all in a known manner. The radiation before and after being incident on the sample may be transmitted through air or through another medium, e.g. via an optical guide, e.g. a cable of optical fibre or fibres. In one convenient form of the invention, radiation from a given near infra-red source is delivered to the sample via a first optical guide and radiation from the sample is delivered to the detector via a second optical guide. Where the radiation to be detected is that reflected or scattered by the sample, at least part of the first and second guides may be formed from an integral guide structure in a known manner (see, for example, WO-A-92/09881).

The method of the present invention may be carried out using any suitable near infra-red analyser. Such instruments are described in, for example, US Patents Nos. 4040747, 4264205 and 4285596.

An example of a suitable instrument is the commercially available Antaris^{™}NIR analyser, from Nicolet Industrial Solutions, Madison, Wisconsin, USA (tel: (608) 276 6100; www.nicoletindustrial.com). It is preferred that the analyser is fully configured to allow solid and liquid samples to be analysed in a number of ways. For example, to analyse a solid material such as static calcium carbonate particles, the analyser is suitable configured to act on the material as a sample in a container or via a fibre optic or other suitable probe placed directly in the material. Where a continuous analysis and/or processing control method is required, the analyser must be suitably configured; a probe placed directly in the material being processed is preferred in that case.

The detection of radiation from the sample of inorganic particulate material in the method of the invention may be by use of one of the detectors known in near infra-red spectroscopy. In general, the detected spectrum will be characteristic of the material of the sample as determined by the spectrum which has been absorbed by the sample. The analysis of the signal representative of the detected infra-red spectrum may be carried out using signal processing techniques known in near infra-red spectroscopy.

In order to enhance one or more components of interest within the signal one or more known mathematical or statistical operations are applied, e.g. first or higher order differentiation may be applied, as known in near infra-red spectroscopy. A signal representative of the result for the spectral component of interest may be delivered to a comparator device, e.g. processor or microprocessor, in which the result is compared with data obtained from calibration measurements. The output from the comparator may be displayed in a known manner, e.g. using a digital electro-optic display or a video screen, and/or employed as a control signal, e.g. an error control signal in a closed loop control system employed to adjust and control the conditions of a process being employed to treat the inorganic particulate material. For example, the control signal may be employed to control the concentration or rate at which surface treatment agent is applied to treat the surfaces of mineral particles, e.g. at which amine or silane is applied to treat kaolin or calcined kaolin.

### Brief Description of the Drawings

For further illustration of the present invention, non-limiting examples will be described below, with reference to the accompanying drawings.

### In the drawings:

Figure 1 shows the total stearate (stearic acid) on ground calcium carbonate particles, measured using the method of the invention (horizontal axis), correlated against a prior art thermal analysis method (vertical axis) (Example 1);
Figure 2 shows the total dispersant on ground calcium carbonate particles, measured using the method of the invention (vertical axis), correlated against the known amount of dispersant added to the particles (horizontal axis) (Example 2);
Figure 3 shows the total dispersant on clay particles, measured using the method of the invention (vertical axis), correlated against the known amount of dispersant added to the particles (horizontal axis) (Example 3);
Figure 4 shows the results of analysis of ten artificial mixtures of particulate kaolinite, mica, feldspar and quartz, showing the proportion of each component (a) as measured using the method of the invention (cross-hatched bars) and (b) according to the known amount of the component (solid bars) (Example 4);
Figure 5 shows the results of Figure 4 in the form of the correlation, for each mineral, between the percentage by weight measured using the method of the invention (vertical axis), against the known percentage by weight present (horizontal axis) (Example 4); and
Figure 6 shows the total monoethoxy silane SIA0602.0 on clay particles, measured using the method of the invention targeting the silicon-centred portion of the silane molecule (vertical axis), correlated against the known amount of the silane added to the particles (horizontal axis) (Example 5).

### Examples and Detailed Description of the Drawings

### (Example 1

### Quantification of stearate on ground calcium carbonate

The industrial stereate coating process for calcium carbonates generally consists of hot-mixing stearic acid with the calcium carbonate powder. The amount of stearic acid required is governed by the surface area of the calcium carbonate substrate. Typically, levels of up to 1 wt.% stearic acid are used. For some applications, particularly incorporation of the calcium carbonate particles into breathable polymeric film, the stearic acid dose becomes critical. Undercoating or overcoating by more than 0.1 wt% may cause processing or handling problems and potentially severe processing problems.

In this Example, the coated product is closely monitored to check for under- or overcoating.

An Antaris^{™} Near Infra-Red (NIR) Analyser was used to quantitatively analyse the total stearate coating on FilmLink 400 ground calcium carbonate particles from our commercial processing plant at Lixhe. In this and all the following Examples, the sample was presented to the NIR radiation as dry particles in a glass sample tube. Corresponding samples were separately analysed for total stearate using the conventional analysis procedure (weight loss on ignition at 400°C) .

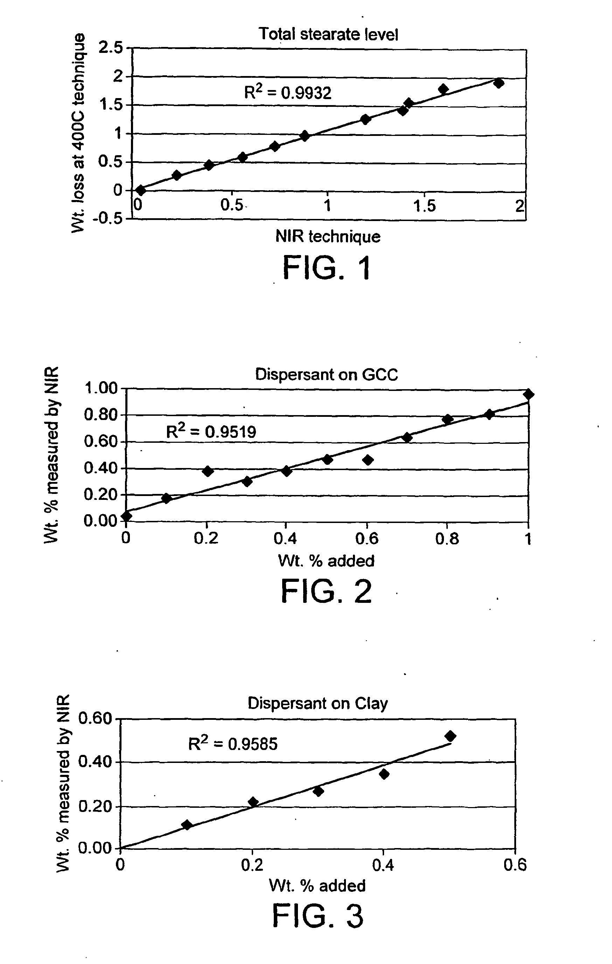

The results were plotted against each other and the correlation is shown in Figure 1. An acceptable quantitative correlation is obtained (R² = 0.9932), showing the utility of the method of the invention in monitoring and controlling an industrial process in which stearic acid is added to calcium carbonate particles.

### Example 2

### Quantification of dispersant level on ground calcium carbonate

For this Example a slurry of ground calcium carbonate was prepared from FilmLink 400 substrate and known quantities of polyacrylate dispersant (Dispex 2695) were added. The samples were dried and pestle and mortar ground, before analysis. The results obtained are shown in the table below, and are illustrated in Figure 2. An acceptable quantitative correlation is obtained (R² = 0.9519), showing the utility of the invention in monitoring and controlling an industrial process in which a dispersant is added to calcium carbonate particles.

| Dispersant added (wt.%) | Dispersant measured by NIR (wt.%) |
|---|---|
| 0 | 0.04 |
| 0.1 | 0.17 |
| 0.2 | 0.38 |
| 0.3 | 0.31 |
| 0.4 | 0.38 |
| 0.5 | 0.47 |
| 0.6 | 0.47 |
| 0.7 | 0.64 |
| 0.8 | 0.77 |
| 0.9 | 0.81 |
| 1 | 0.97 |

### Example 3

### Quantification of dispersant level on clay

For this Example a clay slurry was prepared from a chemical free kaolin and known quantities of a polyacrylate dispersant(Dispex 2695) were added. The samples were dried and pestle and mortar ground before analysis. The results obtained are shown in the table below and are illustrated in Figure 3. An acceptable quantitative correlation is obtained (R² = 0.9585), showing the utility of the method of the invention in monitoring and controlling an industrial process in which a dispersant is applied to clay.

| **Dispersant added (wt.%)** | **Dispersant measured by NIR (wt.%)** |
|---|---|
| 0.1 | 0.11 |
| 0.2 | 0.22 |
| 0.3 | 0.27 |
| 0.4 | 0.35 |
| 0.5 | 0.52 |

### Example 4

### Clay Mineralogy

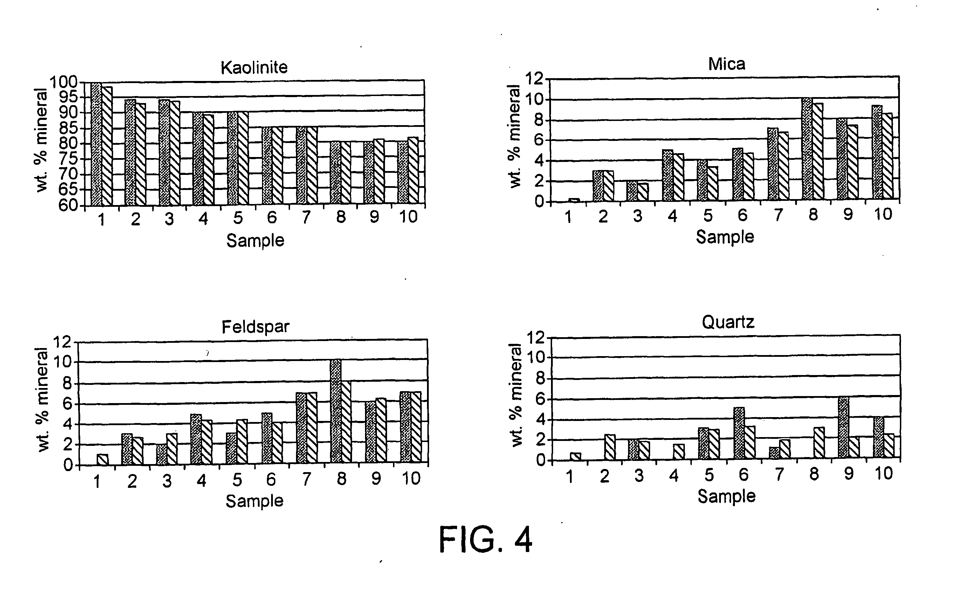

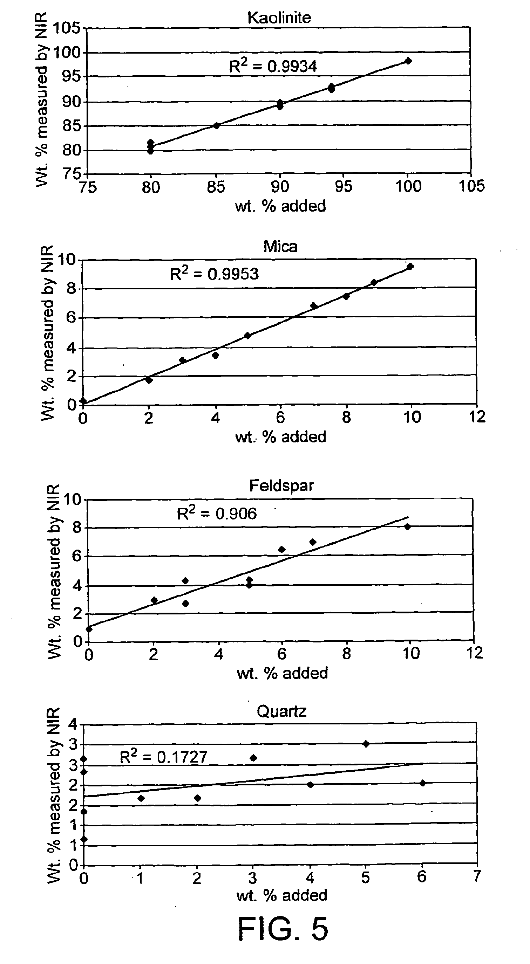

A series of artificial mixtures (named M1 to M10) were prepared from practically pure minerals. Components were accurately weighed into glass vials and simply dry mixed. The table below shows details of the composite mixtures as well as the NIR data, and are illustrated in Figures 4 and 5.

| | Mineral added (wt.%) | | | | Mineral content measured by NIR (wt.%) | | | |
|---|---|---|---|---|---|---|---|---|
| Sample | Kaolinite | Mica | Feld spar | Quartz | Kaolinite | Mica | Feld spar | Quartz |
| M1 | 100 | 0 | 0 | 0 | 99 | 0 | 1 | 1 |
| M2 | 94 | 3 | 3 | 0 | 93 | 3 | 3 | 2 |
| M3 | 94 | 2 | 2 | 2 | 93 | 2 | 3 | 2 |
| M4 | 90 | 5 | 5 | 0 | 89 | 5 | 4 | 1 |
| M5 | 90 | 4 | 3 | 3 | 90 | 3 | 4 | 3 |
| M6 | 85 | 5 | 5 | 5 | 85 | 5 | 4 | 3 |
| M7 | 85 | 7 | 7 | 1 | 85 | 7 | 7 | 2 |
| M8 | 80 | 10 | 10 | 0 | 80 | 9 | 8 | 3 |
| M9 | 80 | 8 | 6 | 6 | 81 | 7 | 6 | 2 |
| M10 | 80 | 9 | 7 | 4 | 82 | 8 | 7 | 2 |

From this experiment we deduce that the method of the present invention will have application in analysing the mineralogy of clays.

### Example 5

### Assessment of NIR for silane coated clays

### Experimental

The potential of the NIR technique of the present invention was assessed by studying the calcined clay Polestar 200R (marketed by the applicant) coated with increasing levels of a silane (from 0 to 2 wt. %). This was to check if a calibration curve with total silane level could be obtained. A calibration experiment was carried out using a monoethoxy silane SIA0602.0 (from ABCR Gelest). The formula for this silane is shown in the table below.

The required amount of silane was added as drops to approximately 10 g of dry calcined clay. The two components were mixed using a small coffee-type grinder mill for a total of 2 minutes with a water cooling bath, the lid being opened after 1 minute to let volatiles escape. The amount of silane on the clay was checked using nitrogen analysis (this is a chemical titration of all nitrogen present in the form of ammonia NH₃ after catalysis) .

The NIR spectra of the coated samples were recorded and a chemometric analysis was applied to find a statistical correlation between the spectral data and the added amount of silane. A calibration curve was obtained and used to study a sample coated with a different silane level. This was to confirm if the NIR method could be used to predict silane levels.

### Results

The table below summarises the results for the Polestar 200R and compares the measured nitrogen level by chemical analysis, the measured silane level by NIR and the silane level added on the calcined clay.

| **MONOETHOXY SILANE** | | | |
|---|---|---|---|
| 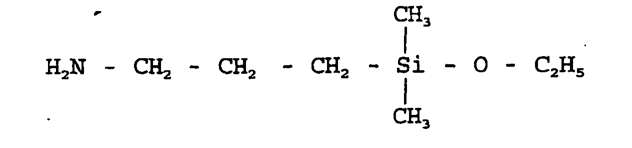 | | | |

| **Added silane level/ wt. %** | **silane level by NIR/ wt.%** | **Nitrogen level by wet chem /ppm** | **Nitrogen level by NIR/ppm** |
|---|---|---|---|
| 0 | 0.00 | 42 | 18 |
| 0.40 | 0.41 | 404 | 526 |
| 0.61 | 0.60 | 586 | 545 |
| 0.76 | 0.79 | 684 | 774 |
| 0.95 | 0.92 | 867 | 813 |
| 1.21 | - | 964 | - |
| 1.45 | 1.44 | 1334 | 1197 |
| 1.77 | 1.74 | 1406 | 1300 |
| 2.05 | 2.02 | 1413 | 1532 |

### NIR analysis: average of 3 measurements on the same treated calcined clay

A small amount of nitrogen was shown to be present in the clay itself and was added to the nitrogen level from the silane.

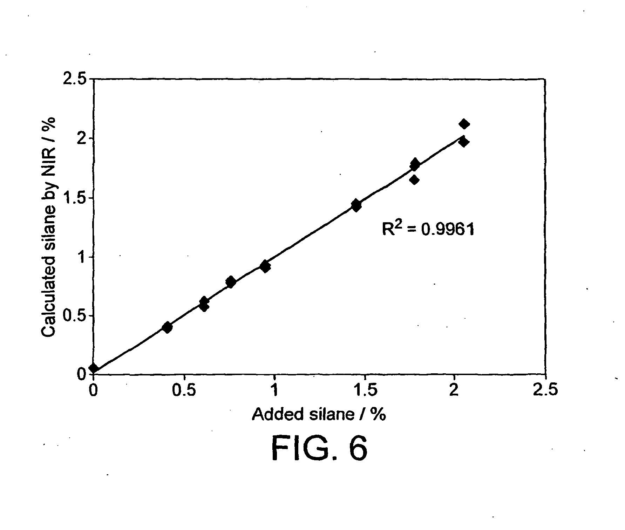

Figure 6 shows the correlation of total silane level obtained from the NIR technique against the added silane level. A correlation with an R² better than 0.99 was found. The standard deviation for silane level was - in the worst cases - ±0.1 wt.%. The error was less than 7%.

### Industrial Applicability

The present invention enables the use of near infra-red spectroscopy in the monitoring and control of industrial processing of inorganic particulate materials.

Known analytical methods are not susceptible of continuous and/or at least partially automated use, are labour intensive and slow. Samples must be extracted from the processing apparatus and analysed by traditional methods. The results may not be to the optimum degree of specificity. For example, the traditional method for analysing calcium carbonate particles for stearic acid (weight loss on ignition at 400° C) cannot differentiate between acid which has reacted with the calcium carbonate surface and excess unreacted acid.

In contrast, the method of the present invention can enable a much faster (possibly up to or exceeding 60 times faster) analysis than hitherto, with less manpower (including easier or no sample preparation and easier operation with less training of personnel), still an acceptable degree of precision (e.g. better than 0.05 wt.%), in some cases a higher degree of specificity (e.g. differentiating unreacted stearic acid from reacted stearate), rugged apparatus for the production plant environment, and the possibility of total or partial automation and/or computer control.

## Claims

1. A method of controlling the industrial processing of an inorganic particulate material, which method comprises applying and chemically reacting an associated substance with the inorganic particulate material wherein associated substance comprises a chemically reactive agent (ii) obtaining a near infra-red spectrum of the inorganic particulate material during the industrial processing; (ii) during step (i) monitoring a physical or chemical property of the inorganic particulate material, or changes therein, by reference to data relating the near infra-red spectrum to the physical or chemical property; and (iv) adjusting a condition of the industrial processing as necessary to maintain the physical or chemical property of the inorganic particulate material within a desired range wherein the amount of the associated substance is not greater than three monolayers and wherein a mathematical or statistical operation is applied to a signal representative of the detected near infra-red spectrum to enhance measurement of the signal or a component thereof.

2. A method according to any preceding claim, wherein the inorganic particulate material comprises a pigment, mineral, filler or extender material.

3. A method according to claim 1 or 2, wherein the inorganic particulate material comprises one or more of hydrous kaolin, calcined kaolin, chemically aggregated kaolin, feldspar, silica, magnesia, aluminium silicate, calcium carbonate, magnesium carbonate, calcium magnesium carbonate, barium carbonate, calcium oxide, calcium hydroxide, aluminium hydroxide, titanium dioxide, talc, calcium sulphate and satin white, material obtained from a three layer mineral or from wollastonite or pyrophyllite.

4. A method according to any preceding claim, wherein the mean particle size of the inorganic particulate material is not greater than 10µm.

5. A method according to any one of the preceding claims, wherein near infra-red radiation is delivered to and/or from a sample of the inorganic particulate material using an optical guide.

6. A method according to claim 5, wherein near infra-red radiation is delivered to and from the sample by optical guides at least part of which form a unitary structure.

7. A method according to any one of the preceding claims, wherein a signal obtained from the spectrum of detected near infra-red radiation giving information relating to a property of the inorganic particulate material to be measured is compared in a signal processing device with data relating to the property obtained from calibration measurements of the property by an alternative procedure.

8. A method according to any one of the preceding claims, wherein a signal representing a value of the property measured is displayed on an electro-optical display or computer video screen.

9. A method according to any one of the preceding claims, wherein a signal is derived from the signal representative of the measured property is employed as a control signal in a closed loop control system to adjust or control one or more conditions of a process to treat the inorganic particulate material.

## Patentansprüche

1. Verfahren zur Steuerung der industriellen Behandlung eines anorganischen Teilchenmaterials, umfassend
(i) Anwenden und chemisches Umsetzen eines beteiligten Stoffes mit dem anorganischen Teilchenmaterial, wobei der beteiligte Stoff ein chemisch reagierendes Mittel beinhaltet;
(ii) Erhalten eines Nah-Infrarot-Spektrums des anorganischen Teilchenmaterials während der industriellen Behandlung;
(iii) Überwachen einer physikalischen oder chemischen Eigenschaft des anorganischen Teilchenmaterials während des Schrittes (i) oder deren Veränderung durch Bezugnahme auf Werte, die das Nah-Infrarot-Spektrum zu der physikalischen oder chemischen Eigenschaft liefert; und
(iv) Einstellen einer Bedingung der industriellen Behandlung wie erforderlich, um die physikalische oder chemische Eigenschaft des anorganischen Teilchenmaterials in dem gewünschten Bereich zu halten, wobei die Menge an beteiligtem Stoff nicht größer ist als drei Monolagen und wobei eine mathematische oder statistische Operation erfolgt auf ein Signal, welches für das ermittelte Nah-Infrarot-Spektrum steht, zur Verbesserung der Messung des Signals oder einer Komponente davon.

2. Verfahren nach dem vorhergehenden Anspruch, wobei das anorganische Teilchenmaterial umfasst: Pigment, Mineral, Füller oder Streckungsmittel.

3. Verfahren nach Anspruch 1 oder 2, wobei das anorganische Teilchenmaterial beinhaltet oder mehrere Stoffe aus der Gruppe: wasserhaltiges Kaolin, gebranntes Kaolin, chemisch aggregiertes Kaolin, Feldspat, Silica, Magnesia, Alluminiumsilikat, Calciumcarbonat, Magnesiumcarbonat, Calcium-Magnesiumcarbonat, Bariumcarbonat, Calciumoxid, Calciumhydroxid, Aluminiumhydroxid, Titandioxid, Talk, Calciumsulfat und Satinweiß, Material, erhalten aus einem Drei-Lagen-Mineral oder von Wollastonit oder Pyrophyllit.

4. Verfahren nach irgendeinem vorhergehenden Anspruch, wobei die mittlere Teilchengröße des anorganischen Teilchenmaterials nicht größer ist als 10 Mikrometer.

5. Verfahren nach einem der vorhergehenden Ansprüche, wobei die Nah-Infrarot-Strahlung einfällt auf und/oder kommt von einer Probe des anorganischen Teilchenmaterials unter Verwendung eines Lichtleiters.

6. Verfahren nach Anspruch 5, wobei die Nah-Infrarot-Strahlung einfällt auf und kommt von der Probe über Lichtleiter, von denen mindestens ein Teil eine Struktureinheit bilden.

7. Verfahren nach irgendeinem der vorhergehenden Ansprüche, wobei ein aus dem Spektrum erhaltenes Signal der bestimmten Nah-Infrarotstrahlung eine Information gibt über eine zu messende Eigenschaft des anorganischen Teilchenmaterials, und es verglichen wird in einer Signalverarbeitungsvorrichtung mit Daten, welche die Eigenschaft betreffen und zwar ermittelt aus Kalibriermessungen der Eigenschaft durch ein anderes Verfahren.

8. Verfahren nach irgendeinem der vorhergehenden Ansprüche, wobei auf einem elektrooptischen Display oder einem Computer-Video-Bildschirm ein Signal dargestellt wird, der einen Wert der zu messenden Eigenschaft wiedergibt.

9. Verfahren nach einem der vorhergehenden Ansprüche, wobei ein Signal abgeleitet wird von dem Signal abgeleitet wird, das für die zu messende Eigenschaft steht, und eingesetzt wird als Kontrollsignal in einem geschlossenen rückgekoppelten Steuerungssystem für ein Einstellen und Steuern ein oder mehrerer Bedingungen des Prozesses zur Behandlung des anorganischen Teilchenmaterials,

## Revendications

1. Procédé de régulation du traitement industriel d'un matériau particulaire inorganique, lequel procédé comprend (i) l'application et la réaction chimique d'une substance associée au matériau particulaire inorganique, la substance associée comprenant un agent pouvant subir une réaction chimique ; (ii) l'obtention d'un spectre infrarouge proche du matériau particulaire inorganique pendant le traitement industriel ; (iii) pendant l'étape (i), la surveillance d'une propriété physique ou chimique du matériau particulaire inorganique, ou de changements de cette propriété, par référence à des données reliant le spectre infrarouge proche à la propriété physique ou chimique ; et (iv) l'ajustement d'une condition du traitement industriel, autant que nécessaire pour maintenir la propriété physique ou chimique du matériau particulaire inorganique dans une plage souhaitée, la quantité de la substance associée n'étant pas supérieure à trois monocouches, et une opération mathématique ou statistique étant appliquée à un signal représentatif du spectre infrarouge proche détecté, dans le but d'améliorer la mesure du signal ou d'un composant de ce dernier.

2. Procédé selon l'une quelconque des revendications précédentes, dans lequel le matériau particulaire inorganique comprend un pigment, un produit minéral, une charge ou un extendeur.

3. Procédé selon la revendication 1 ou 2, dans lequel le matériau particulaire inorganique comprend un ou plusieurs des matériaux suivants : kaolin hydraté, kaolin calciné, kaolin agrégé par voie chimique, feldspath, silice, magnésie, silicate d'aluminium, carbonate de calcium, carbonate de magnésium, carbonate de calcium et de magnésium, carbonate de baryum, oxyde de calcium, hydroxyde de calcium, hydroxyde d'aluminium, dioxyde de titane, talc, sulfate de calcium et blanc satin, un matériau obtenu à partir d'un produit minéral à structure tricouche ou de wollastonite ou de pyrophyllite.

4. Procédé selon l'une quelconque des revendications précédentes, dans lequel la granulométrie moyenne du matériau particulaire inorganique n'est pas supérieure à 10 µm.

5. Procédé selon l'une quelconque des revendications précédente, dans lequel un rayonnement infrarouge proche est envoyé à un échantillon du matériau particulaire inorganique et/ou en provient, par utilisation d'un guide optique.

6. Procédé selon la revendication 5, dans lequel le rayonnement infrarouge proche est envoyé à l'échantillon, et en provient, grâce à des guides optiques dont au moins une partie forme une structure unitaire.

7. Procédé selon l'une quelconque des revendications précédentes, dans lequel un signal obtenu à partir du spectre du rayonnement infrarouge proche détecté, donnant des informations concernant une propriété du matériau particulaire inorganique devant être mesurée, est comparé, dans un dispositif de traitement de signaux, à des données liées à la propriété obtenue à partir de mesures d'étalonnage de la propriété par un autre mode opératoire.

8. Procédé selon l'une quelconque des revendications précédentes, dans lequel un signal représentant une valeur de la propriété mesurée est affiché sur un dispositif d'affichage électro-optique ou un écran vidéo d'ordinateur.

9. Procédé selon l'une quelconque des revendications précédentes, dans lequel un signal dérivant du signal représentatif de la propriété mesurée est utilisé en tant que signal de régulation dans un système de régulation à boucle fermée, pour ajuster ou commander une ou plusieurs conditions d'un procédé destiné au traitement du matériau particulaire inorganique.
